Europäisches Patentamt

(19) European Patent Office

Office européen des brevets

(11) Publication number: **0 353 415 B1**

(12) **EUROPEAN PATENT SPECIFICATION**

(45) Date of publication of patent specification :
23.10.91 Bulletin 91/43

(51) Int. Cl.⁵ : **B26D 1/00**

(21) Application number : **89109488.0**

(22) Date of filing : **26.05.89**

(54) **Cutting device.**

(30) Priority : **03.06.88 GB 8813089**

(43) Date of publication of application :
**07.02.90 Bulletin 90/06**

(45) Publication of the grant of the patent :
**23.10.91 Bulletin 91/43**

(84) Designated Contracting States :
**AT BE CH DE FR GB IT LI NL SE**

(56) References cited :
**DE-A- 2 625 636**

(73) Proprietor : **SOCIETE DES PRODUITS NESTLE
S.A.
Service des Brevets Case postale 353
CH-1800 Vevey (CH)**

(72) Inventor : **Rawson, Francis Frederick Hamilton
69A Main Street Queniborough
GB-Leicester LE7 8FP (GB)**
Inventor : **Morris, Paul Steven
5, Wymondham Way, Melton Mowbray
Leicester, LE13 1HX (GB)**

## Description

This invention is concerned with improvements relating to cutting, particularly by a method involving the use of high frequency (ultrasonic) vibration devices.

The conventional method of ultrasonic cutting involves the use of a cutting blade which is mounted on an ultrasonic vibrating device with the blade lying in a plane containing the longitudinal axis of vibrations, and moving the blade through the article to be cut in said plane, e.g. DE-A1-2625636.

Difficulty is experienced using conventional methods in that the depth of cut which is attainable is limited. For this reason ultrasonic cutting has in general been limited to thin articles, such as paper, cloth and thin plastic sheets. A significant problem exists in cutting blocks of substantial depth, and/or in providing a number of parallel cuts simultaneously.

Difficulty is also experienced in cutting materials which are brittle, e.g. honeycomb or crystalline materials.

According to this invention there is provided a method of cutting an article involving mounting a cutting blade on an ultrasonic vibrating device in a manner such that the blade lies in a plane extending transverse to the longitudinal axis of vibrations, and moving said blade in said plane through said article.

In this manner the blade moves back and forth transverse to the plane in which it moves through the article, effecting a removal of the material of the article along the line of cut.

Preferably the plane lies at right angles to the longitudinal axis of vibrations.

If desired the device may be rotated about its longitudinal axis, effecting rotation on the blade in the plane within which it lies.

According to this invention there is also provided a cutting device comprising an ultrasonic vibrating device and a cutting blade mounted on the device so as to be vibrated thereby/therewith, the blade lying in a plane extending transvserse (preferably at right angles to) the longitudinal axis of vibration.

In use, the cutting device will be moved relative to an article to be cut, in a plane containing the blade.

If desired, the device may comprise means by which the vibrating device, and hence the blade, is rotated in said plane, i.e. about the longitudinal axis of a vibration, as it is moved in said plane to cut the article.

Conveniently the vibrating device comprises a support member which is vibrated by the device, and the support member comprises a plurality of blades, each lying in one of a plurality of parallel planes, desirable the blades being located at anti-nodes of the support member.

Preferably the vibrating device comprises a plurality of support members, each supporting a plurality of blades, some at least of the support members being secured to the vibrating device through the intermediary of node/anti-node displacement devices.

Preferably the device comprises vibrating mechanism to which the support member or support members are secured, the vibrating mechanism being in the form of a horn, one surface of which is caused to vibrate at ultrasonic frequency.

There will now be given detailed descriptions, to be read with reference to the accompanying drawings, of embodiments of this invention which have been selected for the purposes of illustrating the invention by way of example.

In the accompanying drawings :

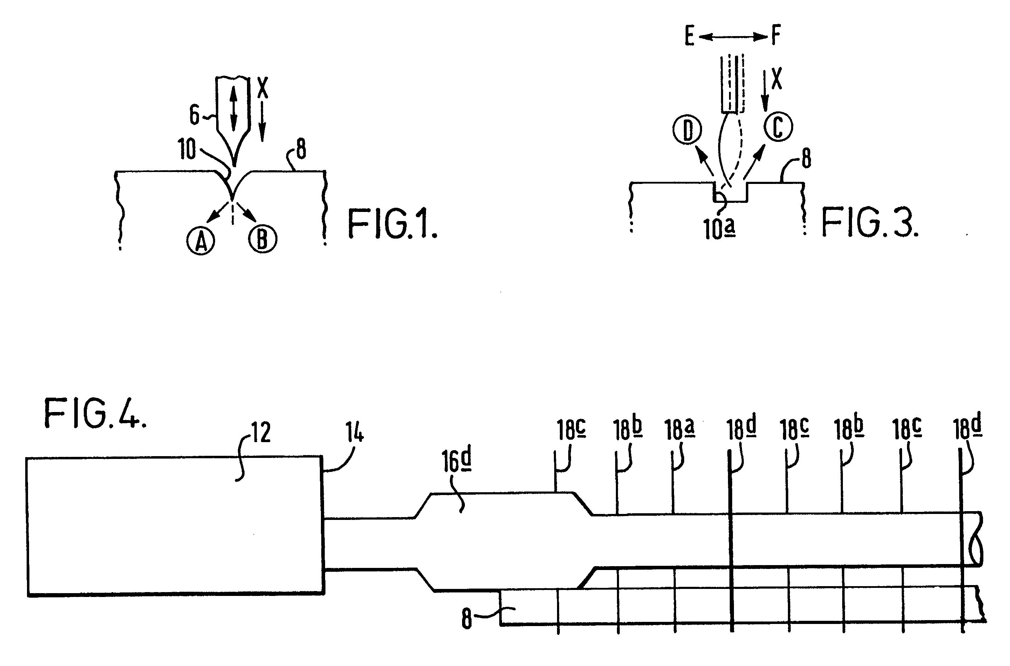

FIGURE 1 is a schematic view showing a conventional ultrasonic cutting device in use in cutting an article ;

FIGURE 2 is a plane view of the cutting device which is the preferred embodiment of this invention ;

FIGURE 3 is a schematic view showing the preferred embodiment in use in cutting an article ;

FIGURE 4 is a side view of the preferred embodiment ;

FIGURE 5 is a view of an alternative form of execution of the invention.

In a conventional ultrasonic cutting operation, a blade 6 is vibrated at ultrasonic frequency in the plane containing the blade, and the blade is moved within said plane in the direction X towards the article 8 to be cut. As the blade penetrates the article, a cut 10 is opened, which subjects the article to compressive vibrations in the directions A and B. Where the article is of a friable or brittle material, this can result in the production of a fractured cut.

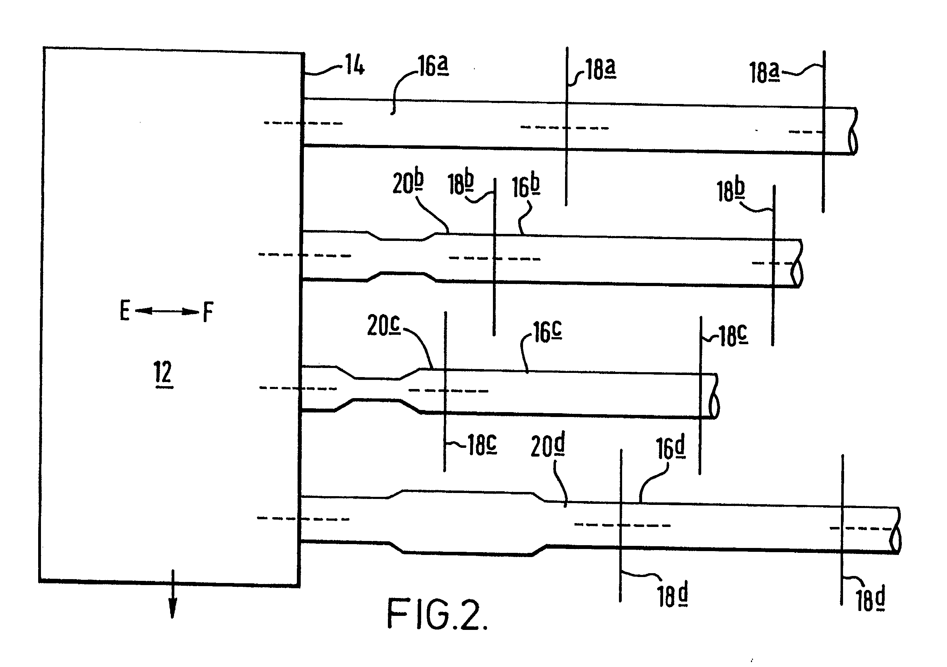

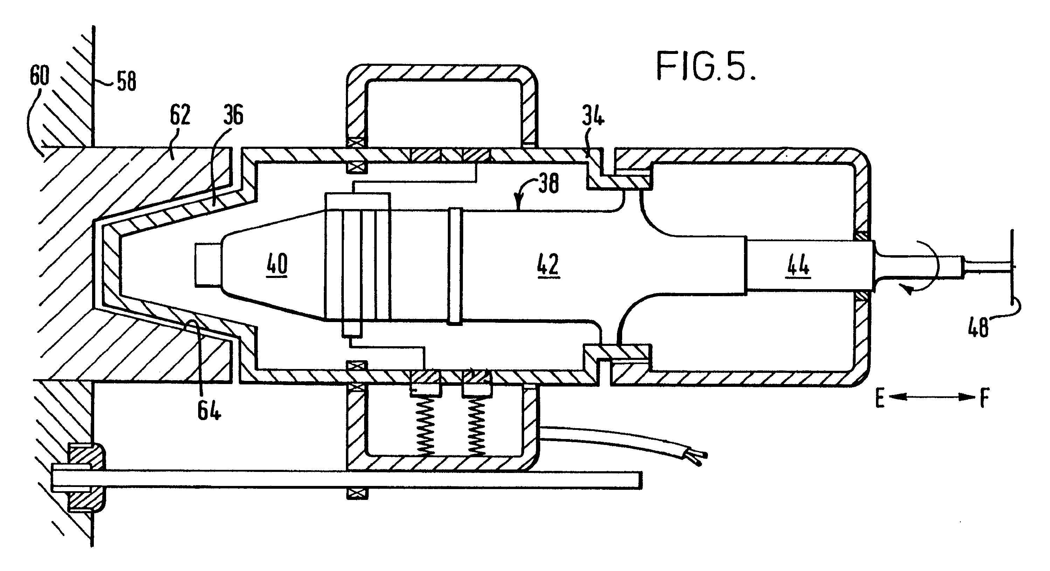

The device which is the preferred embodiment of this invention (Figures 2 and 4) comprises a vibrating device 12 in the form of a mother horn, and front face 14 of which is vibrated at ultrasonic frequency in the longitudinal direction E-F, the face 14 representing an anti-node of the device. Connected to the front face 14 are a plurality of supporting devices 16a, 16b, 16c and 16d, the supporting devices extending in the longitudinal direction E-F.

Mounted at spaced intervals on the supporting member 16a are cutting blades 18a, the cutting blades lying in a plane extending at right angles to the longitudinal axis of the support member, and being located on the support member at spaced anti-nodes. Thus in use, the blades 18 will vibrate in a complicated mode, primarily in the direction E-F, and on passage through the article 8 to be cut, will excavate a cut 10a from the article, as the blade passes through the article in the direction X, while removing fine dust material C and D from the cut slot, see Figure 3. The support members 16b and 16c are mounted on the front face 14 through the intermediary of node/anti-node displacement members 20b, 20c, of the type having reduce mass, whereby the anti-node succeeding the front face 14 is removed in a direction towards the front face 14. Similarly, the support member 16d is connected to the face 14 through the intermediary of a node/anti-node displacement device 20d of the type having added mass, whereby the succeeding anti-node is displaced in a direction away from the face 14.

Thus when blades 18 are mounted on the support members 16b, 16c and 16d at anti-nodes thereof, a blade assembly is produced in which the blades are uniformly staggered in a direction away from the front face 14 (see Figure 4).

In this manner, when the device is moved relative to the article 8 to be cut, relative movement taking place in a direction at right angles to the longitudinal axis E-F, with the blades 18 moving in the planes in which they lay, the article 8 may be cut simultaneously by a plurality of cut lines.

The present invention may also be put into practice as is shown schematically in Figure 5, by simultaneous rotation of the blade about the longitudinal axis of vibration of the device, the cutting operation being effected by movement of the blade in the plane in which it is mounted, i.e. extending at right angles to the longitudinal axis E-F. Thus the invention may be applied, to a machine tool (particularly of the kind disclosed in EP-A-0287374, published after the date of filing of the present application Art. 54(3) EPC, in which an ultrasonic vibrating support member is simultaneously rotated, whilst being capable of multi-axis orientation relative to a workpiece, and capable of movement relative to the workpiece in a plurality of orthogonal axes, such as a robotic arm. Thus there is shown in Figure 5 a high frequency machining tool comprising a housing 34 of generally cross-circular cross-section, having at one end a tapered mounting format ion 36 of a shape similar to that provided in a conventional tool holding chuck. Mounted in the housing is an ultrasonic sub-assembly 38 comprising a transducer 40, and a booster device 42, the booster device carrying a horn 44, at an end portion of which, corresponding to a vibrational anti-node, a blade 48 is mounted, the blade 48, in accordance with this invention, lying in a plane extending at right angles to the longitudinal axis of vibration. The device illustrated in Figure 5 is specifically for use in conjunction with a conventional machine tool comprising a housing 58 in which a rotatable drive spindle 60 is mounted, the spindle 60 carrying at its leading end portion a chuck mounting device 62 provided with a conventional chuck-receiving aperture 64, the machining device being capable of being mounted in the chuck-receiving aperture 64. Thus, the spindle 60 and the housing 34 may be rotated about the longitudinal axis of the spindle 60, i.e. about the longitudinal vibrational axis, whilst the cutting blade 48 may be moved in any desired manner in relation to an article to be cut.

## Claims

1. A method of cutting an article (8) involving mounting a cutting blade (18, 48) on an ultrasonic vibrating device (12, 38) characterised in that the blade (18, 48) lies in a plane extending transverse to the longitudinal axis (E-F) of vibrations, and moving said blade (18, 48) in said plane through said article (8).

2. A method according to claim 1 in which the plane lies at right angles to the longitudinal axis (E-F) of vibrations.

3. A method according to claim 1 in which the device (12, 38) is rotated about its longitudinal axis (E-F), effecting rotation on the blade (18, 48) in the plane within which it lies.

4. A cutting device comprising an ultrasonic vibrating device (12, 38) and a cutting blade (18, 48) mounted on the device so as to be vibrated thereby/therewith, characterised in that the blade (18, 48) lies in a plane extending transversely to the longitudinal axis (E-F) of vibration.

5. A cutting device according to claim 4 in which the blade (18, 48) lies in a plane at right angles to the longitudinal axis (E-F) of vibration.

6. A cutting device according to claim 4 which comprises means by which the vibrating device (38), and hence the blade (48), is rotated about the longitudinal axis (E-F) of vibration, as it is moved in said plane to cut the article (8).

7. A cutting device according to claim 4 wherein the vibrating device (12) comprises a support member (16) which is vibrated by the device (12), and the support member (16) comprises a plurality of blades (18), each lying in one of a plurality of parallel planes.

8. A cutting device according to claim 7 wherein the blades (18) are located at anti-nodes of the support member (16).

9. A cutting device according to claim 4 wherein the vibrating device (12) comprises a plurality of support members (16), each supporting a plurality of blades (18), some at least of the support members (16) being secured to the vibrating device (12) through the intermediary of node/anti-node displacement devices (20).

10. A cutting device according to claim 7 which comprises a vibrating mechanism to which the support member or support members (16) are secured, the vibrating mechanism being in the form of a horn (12), one surface (14) of which is caused to vibrate at ultrasonic frequency.

## Patentansprüche

1. Verfahren zum Schneiden eines Gegenstandes (8), bei welchem eine Schneidklinge (18, 48) auf einer Ultraschallvibrationseinrichtung (12, 38) montiert wird, dadurch gekennzeichnet, daß die Klinge (18, 48) in einer sich quer zur Längsachse (E-F) der Vibrationen erstreckenden Ebene liegt, und daß die Klinge (18, 48) in dieser Ebene durch den Gegenstand (8) bewegt wird.

2. Verfahren nach Anspruch 1, bei welchem die Ebene im rechten Winkel zur Längsachse (E-F) der Vibrationen liegt.

3. Verfahren nach Anspruch 1, bei welchem die Einrichtung (12, 38) um ihre Längsachse (E-F) gedreht wird, was eine Drehung der Klinge (48) in der Ebene bewirkt, in der sie liegt.

4. Schneidvorrichtung mit einer Ultraschallvibrationseinrichtung (12, 38) und einer Schneidklinge (18, 48), die auf der Einrichtung montiert ist, so daß sie durch diese/mit dieser vibriert, dadurch gekennzeichnet, daß die Klinge (18, 48) in einer Ebene liegt, die sich quer zur Längsachse (E-F) der Vibration erstreckt.

5. Schneidvorrichtung nach Anspruch 4, bei welcher die Klinge (18, 48) in einer Ebene unter einem rechten Winkel zur Längsachse (E-F) der Vibration liegt.

6. Schneidvorrichtung nach Anspruch 4, die Mittel aufweist, durch welche die Vibrationseinrichtung (38) und somit die Klinge (48) um die Längsachse (E-F) der Vibration gedreht wird, wenn sie in der genannten Ebene bewegt wird, um den Gegenstand (8) zu schneiden.

7. Schneidvorrichtung nach Anspruch 4, bei welcher die Vibrationseinrichtung (12) einen Trägerteil (16) aufweist, der von der Einrichtung (12) vibriert wird, und der Trägerteil (16) mehrere Klingen (18) aufweist, von denen jede in einer von mehreren parallelen Ebenen liegt.

8. Schneidvorrichtung nach Anspruch 7, bei welcher die Klingen (18) an Schwingungsbäuchen des Trägerteiles (16) angeordnet sind.

9. Schneidvorrichtung nach Anspruch 4, bei welcher die Vibrationseinrichtung (12) mehrere Trägerteile (16) aufweist, von denen jeder mehrere Klingen (18) trägt, wobei zumindest einige der Trägerteile (16) an der Vibrationseinrichtung (12) unter Zwischenschaltung von Schwingungsknoten/Schwingungsbäuchen-Versetzungseinrichtungen (20) befestigt sind.

10. Schneidvorrichtung nach Anspruch 7, die einen Vibrationsmechanismus aufweist, an welchem der Trägerteil oder die Trägerteile (16) befestigt sind, wobei der Vibrationsmechanismus in Form eines Hornes (12) ist, von dem eine Oberfläche (14) zu Ultraschallfrequenz-Vibrationen angeregt wird.

que lame (18, 48) est contenue dans un plan s'étendant transversalement à l'axe longitudinal (E-F) de vibrations, ladite lame (18, 48) étant déplacée dans ledit plan à travers ledit article (8).

2. Procédé selon la revendication 1, dans lequel le plan s'étend perpendiculairement à l'axe longitudinal (E-F) de vibrations.

3. Procédé selon la revendication 1, dans lequel le dispositif (12, 38) est mis en rotation autour de son axe longitudinal (E-F), effectuant une rotation de la lame (48) dans le plan qui la contient.

4. Dispositif de coupe comportant un dispositif vibrant ultrasonique (12, 38) et une lame de coupe (18, 48) montée sur le dispositif afin d'être mise en vibration par lui/avec lui, caractérisé en ce que la lame (18, 48) est contenue dans un plan s'étendant transversalement à l'axe longitudinal (E-F) de vibration.

5. Dispositif de coupe selon la revendication 4, dans lequel la lame (18, 48) s'étend dans un plan perpendiculaire à l'axe longitudinal (E-F) de vibration.

6. Dispositif de coupe selon la revendication 4, qui comporte des moyens par lesquels le dispositif vibrant (38) et donc la lame (48) sont mis en rotation autour de l'axe longitudinal (E-F) de vibration, pendant qu'ils sont déplacés dans ledit plan pour couper l'article (8).

7. Dispositif de coupe selon la revendication 4, dans lequel le dispositif vibrant (12) comprend un élément de support (16) qui est mis en vibration par le dispositif (12), et l'élément de support (16) comporte plusieurs lames (18) s'étendant chacune dans l'un de plusieurs plans parallèles.

8. Dispositif de coupe selon la revendication 7, dans lequel les lames (18) sont placées à des ventres de l'élément de support (16).

9. Dispositif de coupe selon la revendication 4, dans lequel le dispositif vibrant (12) comporte plusieurs éléments (16) de support, supportant chacun plusieurs lames (18), certains au moins des éléments de support (16) étant fixés au dispositif vibrant (12) par l'intermédiaire de dispositifs (20) de déplacement noeuds/ventres.

10. Dispositif de coupe selon la revendication 7, qui comporte un mécanisme vibrant auquel l'élément de support ou les éléments de support (16) sont fixés, le mécanisme vibrant étant sous la forme d'un pavillon (12) dont une surface (14) est mise en vibration à une fréquence ultrasonique.

**Revendications**

1. Procédé de coupe d'un article (8) impliquant un montage d'une lame de coupe (18, 48) sur un dispositif vibrant ultrasonique (12, 38), caractérisé en ce

FIG.1.

FIG.3.

FIG.4.

FIG.2.

EP 0 353 415 B1

FIG.5.

60 58 62 36 34 38 40 42 44 48 64

E ⟷ F

EP 0 353 415 B1